# EUROPÄISCHE PATENTANMELDUNG

(11) **EP 0 977 302 A2**
(43) Veröffentlichungstag der Anmeldung: **02.02.2000**
(21) Anmeldenummer: 99112979.2
(22) Anmeldetag: 05.07.1999
(51) Int. Cl.: H01Q 1/12, H04B 7/24, H04B 17/00

(54) **Verfahren zum Ausrichten von Antennen von dezentralen Einrichtungen auf eine mit diesen drahtlos verbundene zentrale Einrichtung**

(30) Priorität: 27.07.1998 DE 19833779
(71) Anmelder: SIEMENS AKTIENGESELLSCHAFT, 80333 München (DE)
(72) Erfinder: Deinzer, Arnulf, Dr., 81476 München (DE); Heinbach, Wolfgang, Dr., 82194 Gröbenzell (DE); Mohr, Bernd, 88436 Eberhardzell (DE)

(57) **Zusammenfassung**

In den dezentralen Einrichtungen (RNT) wird jeweils aus dem empfangenen, von der zentralen Einrichtung (BS) drahtlos übermittelten Signal (fs) eine dessen Empfangsqualität anzeigende Einstellinformation (ei) abgeleitet und über eine Schnittstelle (a/b) der dezentralen Einrichtung (RNT) an eine externe Ausgabeeinrichtung (KE) übermittelt. In Abhängigkeit von der an der Ausgabeeinheit (KE) ausgegebenen Einstellinformation (ei) wird die jeweilige Antenne (A) positioniert und/oder ausgerichtet. Hierbei sind alle Empfangseinheiten in die Bestimmung der Empfangsqualität einbezogen.

## Beschreibung

Seit geraumer Zeit werden Kommunikationsendgeräte über eine Funkstrecke an öffentliche oder private Kommunikationsnetze angeschlossen. Für den drahtlosen Anschluß sind in einer Basisstation und in Netzabschlußeinrichtungen jeweils Komponenten vorgesehen, durch die jeweils eine Funkstrecke zwischen der Basisstation und den drahtlos angeschlossenen Kommunikationsendgeräten realisiert ist. Die Funkstrecke ist üblicherweise nach dem internationalen DECT-Standard oder einem CDMA-Zugriffsverfahren realisiert. Die Kommunikationsendgeräte sind leitungsgebunden an die Netzabschlußeinrichtungen angeschlossen. Derartige Anschlußkonzepte sind in der Fachwelt auch als RLL (Radio in the Loop)- oder WLL (Wireless Local Loop)-Systeme bekannt, wobei die drahtlos miteinander verbundene Netzabschlußeinrichtungen und die Basisstation jeweils stationär angeordnet sind. Bei einer derartigen stationären Anordnung sind insbesondere die Antennen der Netzabschlußeinrichtungen möglichst genau auf die zentrale, netzseitige Basisstation auszurichten. Eine möglichst präzise Ausrichtung der Antennen der Netzabschlußeinrichtungen ist insbesondere bei nach dem CDMA-Zugriffsverfahren realisierten Funkstrecken erforderlich, da Ungenauigkeiten bei der Ausrichtung der Antennen zu erhöhten Sendeleistungen bei den Netzabschlußeinrichtungen und der zentralen Einrichtung führen. Da bei derartigen Funkstrecken eine 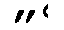 automatic power control"-Function realisiert ist, führt dies automatisch zu einer Reduktion der Gesamtperformance des Funksystems, d.h. die Ressource Funkstrecke wird mehr als nötig verknappt.

Bisher wurde am vorgesehenen Standort der Netzabschlußeinrichtung mit einer geeichten Meßeinrichtung der absolute Empfangspegel des von der Basisstation ausgesandten Funksignals festgestellt, und überprüft, ob dieser absolute Empfangspegel für einen Betrieb der Netzabschlußeinrichtung ausreicht. Bei nicht ausreichendem Empfangspegel wurde der Standort verändert. Anschließend erfolgt eine Feinausrichtung der Antenne auf die Basisstation bzw. die Antenne der Basisstation, wobei für die Feinausrichtung ebenfalls die Empfangspegel herangezogen wird. Für die Messung des Empfangspegels wurde die Antenne der Netzabschlußeinrichtung an das Meßgerät angeklemmt. Nach der Messung des Empfangspegels wird das Meßgerät entfernt und die Antenne an die Netzabschlußeinrichtung angeschlossen. Das Entfernen des Meßgerätes von der Antenne und das Anschalten der Netzabschlußeinrichtungen stellen zusätzliche Arbeitsgänge dar, die zusätzlich in exponierter Lage - auf einem Dach oder auf einem Mast - durchgeführt werden müssen. Des weiteren kann die Antenne fehlerhaft angeschlossen werden, was zu erheblichen Fehlfunktionen des Gesamtsystems führt. Mit der vorhergehend erläuterten Meßmethode kann kein Gesamttest der Netzabschlußeinrichtung - d.h. Antenne, Verbindungskabel und die Netzabschlußeinrichtung selbst - durchgeführt werden, wodurch detaillierte Angaben über die Leistungsfähigkeit der Netzabschlußeinrichtungen nicht möglich sind.

Die der Erfindung zugrunde liegende Aufgabe ist darin zu sehen, ein Verfahren zur präzisen Ausrichtung von Antennen von Netzabschlußeinrichtungen auszugestalten, die drahtlos insbesondere nach dem CDMA-Zugriffsverfahren an Basisstationen angeschlossen sind. Die Aufgabe wird durch die Merkmale des Patentanspruchs 1 gelöst.

Der wesentliche Aspekt des erfindungsgemäßen Verfahrens ist darin zu sehen, daß in den dezentralen Einrichtungen jeweils aus dem empfangenen, von der zentralen Einrichtung ausgesandten Signal eine dessen Empfangsqualität anzeigende Einstellinformation abgeleitet wird und die abgeleitete Einstellinformation über eine Schnittstelle der dezentralen Einrichtung an eine externe Ausgabeeinrichtung übermittelt wird. Die jewellige Antenne wird in Abhängigkeit von der an der Ausgabeeinheit ausgegebenen Einstell-Informationen positioniert bzw. ausgerichtet. Hierbei wird durch die Messung der Empfangsqualität, insbesondere des Empfangspegels des von der Basisstation ausgesandten Signals in der Netzabschlußeinrichtung selbst eine exakte Einstellung der Antenne einer Netzabschlußeinrichtung möglich, da alle die Empfangsqualität beeinflussenden Komponenten in die Messung einbezogen sind. Des weiteren kann die Antenne mit der Netzabschlußeinrichtung verbunden bleiben, wodurch weitere Fehlerquellen insbesondere beim Abklemmen und beim Anschließen des Meßgerätes bzw. der Netzabschlußeinrichtungen vermieden werden. Des weiteren ist mit Hilfe des erfindungsgemäßen Verfahrens überhaupt erst eine Ausrichtung der Antenne derjenigen Netzabschlußeinrichtungen möglich, bei denen die Antenne und die Netzabschlußeinrichtung eine integrale Einheit repräsentieren.

Gemäß einer vorteilhaften Ausgestaltung des erfindungsgemäßen Verfahrens wird aus dem empfangenen Signal die Bitfehler-Übertragungsrate abgeleitet und eine die abgeleitete Bitfehler-Übertragungsrate repräsentierende Einstellinformation an die externe Ausgabeeinrichtung übermittelt - Anspruch 4. Mit Hilfe dieser Messung der Bitfehler-Übertragungsraten können detaillierte Angaben über die Qualität der Ausrichtung der Antenne zusammen mit den Komponenten der Netzabschlußeinrichtung ermittelt und protokolliert werden.

Gemäß einer weiteren vorteilhaften Ausgestaltung des erfindungsgemäßen Verfahrens wird in der dezentralen Einrichtung die Einstellinformation in eine auditive Einstellinformation konvertiert - Anspruch 6. Hierbei kann beispielsweise ein höherer gemessener Empfangspegel des von der Basisstation übermittelten Funksignals in Audiosignale mit höheren Frequenzen konvertiert werden. Diese können in der Ausgabeeinrichtung akustisch wiedergegeben werden.

Vorteilhaft wird die Einstellinformation über die durch eine vorhandene Kommunikationsendgeräte-Schnittstelle realisierte Schnittstelle übermittelt - Anspruch 8. Diese Realisierung ist besonders vorteilhaft, da die bereits vorhandene Kommunikationsendgeräte-Schnittstelle für den drahtgebundenen Anschluß von Kommunikationsendgeräten - beispielsweise ISDN-Kommunikationsendgeräte oder Fernsprechendgeräte - temporär für das Ausrichten der Antenne der Netzabschlußeinrichtung benutzt werden. Hierzu sind lediglich besondere Zugriffsverfahren für den gesicherten Zugriff des Service-Personals zu implementieren.

Die Einstellinformation wird vorteilhaft über die Schnittstelle an eine durch eine mit einer Anzeigeeinheit und/oder Akustikeinheit ausgestattete Meßeinrichtung oder ein Kommunikationsendgerät übermittelt - Anspruch 10. Bei Verwendung einer Meßeinrichtung oder eines Kommunikationsendgerätes kann vorteilhaft zur Visualisierung der Einstellinformation eine Anzeigeeinheit vorgesehen werden. Bei einer besonderen vorteilhaften Verwendung eines Kommunikationsendgerätes, das um die vorhandene Kommunikationsendgeräte-Schnittstelle angeschlossen wird, kann eine bereits vorhandene Akustikeinheit - beispielsweise eine Hörkapsel - für die akustische Wiedergabe der Einstellinformation - beispielsweise ein Tonsignal mit unterschiedlichen Frequenzen - verwendet werden.

Weitere vorteilhafte Ausgestaltungen der Erfindung sind den weiteren Ansprüchen zu entnehmen.

Im folgenden wird das erfindungsgemäße Verfahren anhand eines Blockschaltbildes und eines Ablaufdiagrammes näher erläutert. Dabei zeigen
- Fig. 1: in einem Blockschaltbild eine erfindungsgemäß realisierte Netzabschlußeinrichtung und
- Fig. 2: in einem Ablaufdiagramm das erfindungsgemäße Verfahren.

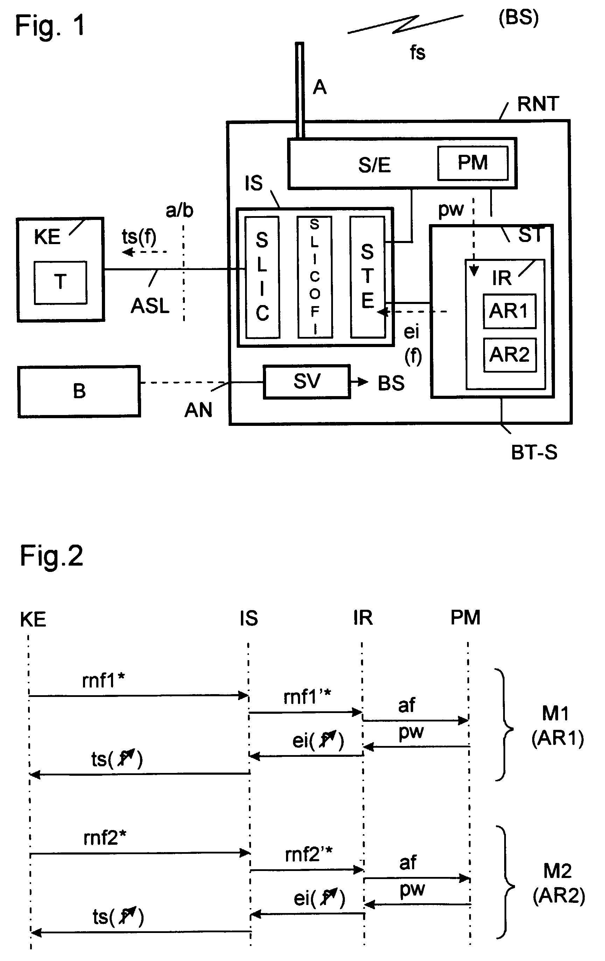

Figur 1 zeigt eine Netzabschlußeinrichtung RNT, die drahtlos mit einer nicht dargestellten Basisstation (BS) verbunden ist. Die Netzabschlußeinrichtung RNT weist zur Realisierung des drahtlosen Anschlusses eine Sende-/Empfangseinheit S/E auf, die mit einer Antenne A verbunden ist. Die eine Richtwirkung aufweisende Antenne A ist platzsparend direkt in der Netzabschlußeinrichtung RNT oder separat als 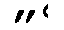 Outdoor"-Einheit realisiert. Der drahtlose Anschluß bzw. die Funkstrecke zwischen der Basisstation (BS) und der Netzabschlußeinrichtung RNT kann gemäß dem DECT-Standard oder einem CDMA-Zugriffsverfahren oder einer Kombination beider Verfahren erfolgen.

Für die erfindungsgemäße Messung des Pegels eines von der Basisstation (BS) übermittelten Funksignals fs ist in der Sende-/Empfangseinheit S/E eine Pegelmeßeinheit PM vorgesehen. Bei Verwendung eines CDMA-Zugriffsverfahrens ist bereits eine Pegelmeßeinheit PM vorhanden, die vorteilhaft in das erfindungsgemäße Verfahren einbezogen werden kann. Bei einer Realisierung gemäß dem DECT-Standard ist eine Pegelmeßeinheit PM in die Sende-/Empfangseinrichtung S/E zu integrieren.

Die Sende-/Empfangseinheit S/E ist sowohl mit einer Steuereinheit ST als auch einer Interface-Schaltung IS verbunden. Für die Realisierung des erfindungsgemäßen Verfahrens ist in der Steuereinheit ST eine Installationsroutine IR implementiert.

Die Interface-Schaltung IS weist eine analoge Fernsprech-Schnittstelle a/b auf, an die ein analoges Kommunikationsendgerät KE, insbesondere ein analoges Fernsprechendgerät angeschlossen ist. Für die Realisierung der analogen Fernsprech-Schnittstelle a/b ist in der Interface-Schaltung IS eine SLIC-, eine SLICOFI- und eine Steuereinheit SLIC, SLICOFI, STE vorgesehen. In der SLIC-Einheit SLIC wird die angeschlossene, zweidrähtige Anschlußleitung ASL impedanzgerecht abgeschlossen, eine Zwei-Vierdraht-Wandlung und eine Echo-Unterdrückung realisiert. Des weiteren ist in der SLIC-Einheit SLIC eine Impulswahlerkennung vorgesehen, wobei eine hierbei auftretende Schleifenunterbrechung der SLICOFI-Einheit SLICOFI mitgeteilt wird. In dieser wird insbesondere eine Konvertierung der analog ankommenden Signale in digitale Signale und umgekehrt durchgeführt. Des weiteren werden in der SLICOFI-Einheit SLICOFI die zum Kommunikationsendgerät KE zu übermittelnden Signalisierungsinformationen - beispielsweise analoge Rufsignale oder Belegtsignale - in die analoge Anschlußleitung ASL eingekoppelt. Mit Hilfe der Steuereinheit STE wird die Interface-Schaltung IS überwacht und ein Interface für den Anschluß an die Steuereinheit ST realisiert. Des weiteren werden die digitalen, ankommenden oder zu sendenden Signale über dieses Interface an die Sende-/Empfangseinrichtung S/E übertragen und umgekehrt.

In der Netzabschlußeinrichtung RNT ist des weiteren eine Stromversorgung SV angeordnet, in der die erforderlichen Betriebsspannungen BS für die jeweiligen Komponenten ST, IS, S/E erzeugt werden - in Figur 1 durch einen mit BS bezeichneten Pfeil angedeutet. Die Stromversorgung SV wird über einen Anschluß AN mit Gleichspannung versorgt, wobei im Betriebsfall ein eine Gleichspannung lieferndes Netzgerät - nicht dargestellt - angeschlossen ist. Für das Ausrichten der Antenne A der Netzabschlußeinrichtung RNT wird an diesen Anschluß AN eine Batterie B oder eine Stromversorgung - nicht dargestellt - angeschlossen - in Figur 1 ist der Anschluß durch eine strichlierte Linie dargestellt.

Figur 2 zeigt ein Ablaufdiagramm, bei dem der in Figur 1 dargestellten Kommunikationseinrichtung KE, der Installationsroutine IR, der Interface-Schaltung IS und der Pegelmeßeinheit PM jeweils eine senkrechte, strichpunktierte Linie zugeordnet ist - die einzelnen Komponenten sind in Figur 2 durch die Bezeichnungen KE, IS, ER und PM repräsentiert.

Nach dem Anschluß des analogen Kommunikationsendgerätes KE an die analoge Fernsprechschnittstelle a/b wird vom analogen Kommunikationsendgerät KE mit Hilfe einer in diesem angeordneten Tastatur T eine erste Rufnummernfolge rnf1 - beispielsweise dreistellig - sowie ein Abschlußzeichen - beispielsweise * - gebildet und über die Anschlußleitung ASL mit Hilfe des Impulswahlverfahrens übermittelt. In der Interface-Schaltung IS werden in der SLIC-Einheit SLIC die Impulsfolgen bzw. die Schleifenunterbrechungen erkannt und über die SLICOFI-Einheit SLICOFI an die Steuereinheit STE übermittelt. In der Steuereinheit ST wird aus der Impulsfolge eine die erste Rufnummernfolge rnf1 einschließlich des Abschlußzeichens * repräsentierende Information rnf1'* abgeleitet und an die in der Steuereinheit ST implementierte Installationsroutine IR weitergeleitet. In der Installationsroutine IR wird durch die erste, übermittelte Information rnf1'* eine erste Antennenausrichtungs-Routine AR1 aufgerufen. Mit Hilfe dieser ersten Anterinenausrichtungs-Routine AR1 wird die in der Sende-/Empfangseinheit S/E integrierte Pegelmeßeinrichtung PM durch eine Anforderungsinformation af aufgefordert, die gemessenen Pegelwerte pw des Empfangspegels des von der Basisstation BS übermittelten Funksignals fs an die erste Antennenausrichtungs-Routine AR zu übermitteln. Mit Hilfe der Antennenausrichtungs-Routine AR werden die in digitaler Form vorliegenden Pegelmeßwerte pw in eine Einstellinformation ei konvertiert, deren Informationsgehalt eine Frequenz f eines Tonsignals ts repräsentiert, d.h. unterschiedliche Pegelmeßwerte sind durch unterschiedliche Frequenzen f eins Tonsignals ts repräsentiert. Die Einstellinformation ei wird an die Steuereinheit STE der Interface-Schaltung IS weitergeleitet und mit deren Hilfe wird die SLIC-Einheit SLIC derart eingestellt, daß von dieser Tonsignale ts an die analoge Kommunikationseinrichtung KE mit der durch die Einstellinformation ei bestimmten Frequenz f übermittelt werden. Erfindungswesentlich ist hierbei, daß durch die Frequenz f des Tonsignals ts, d.h. durch die Tonhöhe, die Höhe des gemessenen Pegels der empfangenen Funksignale fs bestimmt ist. Das Tonsignal ts wird beispielsweise an der Hörkapsel eines analogen Fernsprechapparates, d.h. eines analogen Kommunikationsendgerätes KE ausgegeben. Analog hierzu kann auch ein im analogen Kommunikationsendgerät KE angeordneter Lautsprecher zur Ausgabe des Tonsignals ts verwendet werden.

Mit dieser ersten Messung M1 des Pegels des empfangenen Funksignals fs wird zum einen festgestellt, ob die Höhe des Pegels des empfangenen Funksignals fs ausreicht, um einen störungsfreien, drahtlosen Anschluß an die Basisstation BS zu gewährleisten, und zum anderen eine Grobausrichtung der Antenne A durchgeführt. Diese Ausrichtung der Antenne A ist generell erforderlich, da die meist nicht stabförmig ausgestaltete Antenne A eine erhebliche Richtwirkung sowohl beim empfangenen als auch zu sendenden Funksignal fs aufweist. Reicht der Pegel des empfangenen Funksignals fs nicht für einen störungsfreien Betrieb aus, so muß die Position der Netzabschlußeinrichtung RNT verändert, d.h. ein empfangsgünstiger Standort gesucht werden.

Nach dieser ersten Messung M1 wird eine zweite Messung M2 durch Eingabe einer zweiten Rufnummernfolge rnf2 einschließlich eines gleichartigen Abschlußzeichens * eingeleitet. Nach Übermittlung der zweiten Rufnummernfolge rnf2* wird in der Interface-Schaltung IS in gleicher Weise wie vorhergehend beschrieben, eine die digitale, zweite Rufnummernfolge RNF2'* Information gebildet und an die Installationsroutine IR übermittelt. In dieser wird durch die übermittelte, eine zweite digitale Rufnummernfolge RNF2'* repräsentierende Inforamtion eine zweite Antennenausrichtungs-Routine AR2 aufgerufen. In gleicher Weise wie bei der ersten werden durch die zweite Antennenausrichtungs-Routine AR2 Pegelmeßwerte pw von der Pegelmeßeinheit PM abgerufen und in eine digitale Einstellinformation ei konvertiert. Der wesentliche Unterschied der ersten und zweiten Antennenausrichtungs-Routine AR1, AR2 ist darin zu sehen, daß eine präzisere Konvertierung der Pegelmeßwerte pw in die Einstellinformationen ei erfolgt. Dies bedeutet, daß die Einstellinformationen ei die Pegelmeßwerte pw wesentlich genauer repräsentieren. Da unterschiedliche Pegelmeßwerte pw durch Tonsignale ts mit unterschiedlichen Frequenzen f dargestellt werden, werden mit Hilfe der zweiten Antennenausrichtungs-Routine AR2 Differenzen der Pegelmeßwerte PW mit wesentlich größeren Unterschieden der Frequenz f dargestellt. Hierdurch wird zwar der Meßbereich verkleinert, jedoch die Genauigkeit erhöht. Durch diese präzisere Mitteilung der gemessenen Pegelwerte pw an das analoge Kommunikationsendgerät KE können kleinste Unterschiede der gemessenen Pegelwerte PW einer Bedienperson an beispielsweise der Hörkapsel des analogen Kommunikationsendgerätes KE hörenden Person mitgeteilt werden. Diese zweite Messung M2 ist zur Feinausrichtung der Antenne A vorgesehen, wobei kleinste Richtungsabweichungen der Antenne A durch kleine Pegelmeßwertabweichungen repräsentierende Tonsignale ts mit hörbaren Frequenzabweichungen dem Bedienpersonal angezeigt werden. Nachdem die Feinausrichtung der Antenne A durchgeführt ist, kann eine Subskripierung des Kommunikationsendgerätes KE bzw. der Netzabschlußeinrichtung NT durchgeführt werden. Alternativ kann die erste und zweite Messung M1,M2 zu einer Messung zusammengefaßt werden, jedoch sollte der Empfangspegels des empfangenen Funksignals fs derart genau gemessen werden, daß die zusätzlich zur Standortbestimmung und Grobausrichtung der Antenne auch die Feinausrichtung der Antenne durchgeführt werden kann.

Das erfindungsgemäße Verfahren ist auch bei Anschluß von digitalen Kommunikationsendgeräten KE, beispielsweise ISDN-Kommunikationsendgeräten anwendbar. Hierbei ist die zwischen Kommunikationsendgerät KE und der Netzabschlußeinrichtung RNT angeordnete Schnittstelle beispielsweise als S0- oder als UK0-Schnittstelle gemäß dem ISDN-Standard ausgestaltet. Für den Anschluß von digitalen Kommunikationsendgeräten sind in der Interface-Schaltung IS entsprechende Signalisierungs- und Protokoll-Steuereinheiten vorzusehen. Desweiteren kann alternativ oder zusätzlich für den Anschluß einer Ausgabeeinrichtung eine mit der Steuereinheit ST der Netzabschlußeinrichtung RNT verbundene Betriebstechnik-Schnittstelle BT-S vorgesehen werden. An diese Betriebstechnik-Schnittstelle BT-S kann ein durch einen Personalcomputer realisiertes Betriebstechnikterminal - nicht dargestellt - angeschlossen werden. Mit Hilfe des Betriebstechnikterminals kann die Einstellinformation ei visualiert und/oder akustisch wiedergegeben werden. Alternativ kann ein digitales Meßgerät an die Betriebstechnik-Schnittstelle BT-S angeschlossen werden, durch das die digitale Einstellinformation ei digital angezeigt wird - beispielsweise ein digitalisiertes Tonsignal mit seiner Frequenz.

## Patentansprüche

1. Verfahren zum Ausrichten einer mit einer dezentralen Einrichtung (RNT) verbundenen Antenne (A) auf eine mit den dezentralen Einrichtungen (RNT) drahtlos verbundene zentrale Einrichtung (BS),
- bei dem in der dezentralen Einrichtung (RNT) jeweils aus dem empfangenen, von der zentralen Einrichtung (BS) ausgesandten Signal (fs) eine dessen Empfangsqualität anzeigende Einstellinformation (ei) abgeleitet wird,
- bei dem die Einstellinformation (ei) über eine Schnittstelle (a/b) der dezentralen Einrichtung (RNT) an eine externe Ausgabeeinrichtung (KE) übermittelt wird,
- bei dem in Abhängigkeit von der an der Ausgabeeinheit (KE) ausgegebenen Einstellinformation (ei) die jeweilige Antenne (A) positioniert und/oder ausgerichtet wird.

2. Verfahren nach Anspruch 1, **dadurch gekennzeichnet,**
daß das Signal (fs) von einer Basisstation (BS) an drahtlos an diese angeschlossene Netzabschlußeinrichtungen (RNT) ausgesandt wird.

3. Verfahren nach Anspruch 1 oder 2, **dadurch gekennzeichnet,**
daß der Empfangspegel des empfangenen Signals (fs) gemessen wird und daß eine den Empfangspegel repräsentierende Einstellinformation (ei) über die Schnittstelle an die externe Ausgabeeinrichtung (KE) übermittelt wird.

4. Verfahren nach Anspruch 1 oder 2, **dadurch gekennzeichnet,**
daß aus dem empfangenen Signal (fs) die Bitfehler-Übertragungsrate abgeleitet und eine die abgeleitete Bitfehler-Übertragungsrate repräsentierende Einstellinformation (ei) an die externe Ausgabeeinrichtung (KE) übermittelt wird.

5. Verfahren nach einem der Ansprüche 1 bis 4, dadurch gekennzeichnet,
daß das Signal (fs) von der zentralen zur den dezentralen Einrichtungen (BS,RNT) über eine DECT- oder CDMA-orientierte Funkübertragungsstrecke übermittelt wird.

6. Verfahren nach einem der Ansprüche 1 bis 5**, dadurch gekennzeichnet,**
daß in den dezentralen Einrichtungen (RNT) die Einstellinformation (ei) in eine auditive Einstellinformation (ei(f)) konvertiert wird.

7. Verfahren nach einem der Ansprüche 1 bis 6, **dadurch gekennzeichnet,**
daß die Einstellinformation (ei) über die durch eine Betriebstechnik-Schnittstelle realisierte Schnittstelle zur externen Ausgabeeinrichtung übermittelt wird.

8. Verfahren nach einem der Ansprüche 1 bis 6, **dadurch gekennzeichnet,**
daß die Einstellinformation (ei) über eine vorhandene Kommunikationendgeräte-Schnittstelle (a/b) übermittelt wird.

9. Verfahren nach einem der vorhergehenden Ansprüche, **dadurch gekennzeichnet,**
daß die Einstellinformation (ei) mit Hilfe der Ausgabeeinrichtung (KE) visualiert oder die auditive Einstellinformation (ei(f)) akustisch widergegeben wird.

10. Verfahren nach einem der Ansprüche 1 bis 9, **dadurch gekennzeichnet,**
daß die Einstellinformation (ei) über die Schnittstelle (a/b) an eine durch eine mit einer Anzeigeeinheit und/oder Akustikeinheit ausgestatteten Meßeinrichtung oder ein Kommunikationsendgerät (KE) übermittelt wird.

11. Verfahren nach einem der vorhergehenden Ansprüche, **dadurch gekennzeichnet,**
daß bei einer als Kommunikationsendgerät (KE) realisierten Ausgabeeinrichtung, die an eine Kommunikationsschnittstelle (a/b) einer Netzabschlußeinrichtung (RNT) angeschlossen ist,
- mit Hilfe einer einer in der Netzabschlußeinrichtung (RNT) implementierten und durch Eingaben am Kommunikationsendgerät (KE) initialisierten Installationsroutine (IR)
-- der Empfangspegel des von der Basisstation (BS) ausgesandten Signals (fs) gemessen,
-- ein das den gemessenen Empfangspegel repräsentierende Einstellsignal (ei) in ein Audiosignal (ts) konvertiert sowie
-- an das angeschlossene Kommunikationsendgerät (KE) übermittelt wird,
- im Kommunikationsendgerät (KE) das Audiosignal (ts) akustisch wiedergegeben wird, und
- in Abhängigkeit von dem akustisch wiedergegebenen Audiosignal (ts) die Antenne (A) der jeweiligen Netzabschlußeinrichtung (RNT) positioniert und/oder ausgerichtet wird.

12. Verfahren nach Anspruch 11, **dadurch gekennzeichnet,**
daß das Audiosignal (ts) in Abhängigkeit von dem gemessenen Empfangspegel hinsichtlich seiner Frequenz (f) und/oder Amplitude modifiziert und/oder temporär unterbrochen wird.

13. Verfahren nach Anspruch 11 oder 12, **dadurch gekennzeichnet,**
daß bei einem analogen Kommunikationsendgerät (KE) das Audiosignal (ts) durch ein analoges Tonsignal (ts) repräsentiert ist, wobei die unterschiedliche gemessene Empfangspegel durch unterschiedliche Frequenzen (f) des Tonsignals repräsentiert sind.

14. Verfahren nach einem der vorhergehenden Ansprüche, **dadurch gekennzeichnet,**
daß durch eine erste Messung (M1) der Empfangsqualität des von der zentralen Einrichtung (BS) drahtlos übermittelten Signals (fs) mit einer vorgegebenen Genauigkeit der an der Ausgabeeinrichtung (KE) ausgegebenen Einstellinformation (ei) eine störungsfreien Kommunikationsbeziehungen sicherstellende Position der dezentralen Einrichtung (RNT) bestimmt und eine Vorausrichtung der Antenne (A) durchgeführt wird, und daß durch eine zweite Messung (M2) der Empfangsqualtität des von der zentralen Einrichtung (BS) drahtlos übermittelten Signals (fs) mit einer gegenüber der vorgegebenen Genauigkeit erhöhten Genauigkeit der an der Ausgabeeinrichtung (KE) ausgegebenen Einstellinformation (ei) eine Feinausrichtung der Antenne (A) durchgeführt wird.
